# EUROPEAN PATENT SPECIFICATION

(11) **EP 3 719 269 B1**
(45) Date of publication and mention of the grant of the patent: **14.12.2022**
(21) Application number: 18884090.4
(22) Date of filing: 08.11.2018
(51) Int. Cl.: F01K 25/10, F01K 7/32, F01K 19/04, F01K 13/02, F16H 57/02, F16H 1/20

(54) **SUPERCRITICAL CARBON DIOXIDE POWER GENERATION SYSTEM**
ENERGIEERZEUGUNGSSYSTEM MIT ÜBERKRITISCHEM KOHLENDIOXID
SYSTÈME DE PRODUCTION D'ÉNERGIE À DIOXYDE DE CARBONE SUPERCRITIQUE

(30) Priority: 28.11.2017 US 201715823809; 07.02.2018 KR 20180015175
(43) Date of publication of application: 07.10.2020
(73) Proprietor: Hanwha Power Systems Co., Ltd., Changwon-si, Gyeongsangnam-do 51542 (KR)
(72) Inventor: WYGANT, Karl, Changwon-si Gyeongsangnam-do 51542 (KR)
(74) Representative: Gulde & Partner
(86) International application number: PCT/KR2018/013504
(87) International publication number: WO 2019/107786

(56) References cited:
- EP-A1- 2 604 814
- WO-A1-2013/094905
- KR-A- 20110 104 328
- KR-A- 20160 120 471
- KR-B1- 101 204 908
- KR-B1- 101 691 908
- US-A1- 2012 100 015
- US-A1- 2016 326 916

## Description

### TECHNICAL FIELD

One or more embodiments relate to a power generation system capable of generating power by using supercritical carbon dioxide (CO₂) as a working fluid.

### BACKGROUND ART

A supercritical carbon dioxide (CO₂) power generation system is a power generation system that drives a turbine by heating CO₂ that is compressed to an extra-high pressure equal to or greater than a critical pressure, to high temperature.

Such a supercritical CO₂ power generation system generally adopts a Brayton cycle type, which has been recently and actively researched for its high power generation efficiency and less limitation in heat sources.

Korean Laid-open Patent No. 2016-0130551 discloses a supercritical CO₂ power generation system using a parallel expansion type cascade cycle.

European Laid-open Patent Application No. EP 2 604 814 A1 relates to processes and techniques for using a closed cycle system for waste heat recovery.

### DESCRIPTION OF EMBODIMENTS

### TECHNICAL PROBLEM

One or more embodiments provide a supercritical CO₂ power generation system having an improved structure.

### SOLUTION TO PROBLEM

The system according to the invention is described in claim 1.

### ADVANTAGEOUS EFFECTS OF DISCLOSURE

According to an aspect of the present disclosure, a supercritical carbon dioxide (CO₂) power generation system having an improved structure may be implemented.

### BRIEF DESCRIPTION OF DRAWINGS

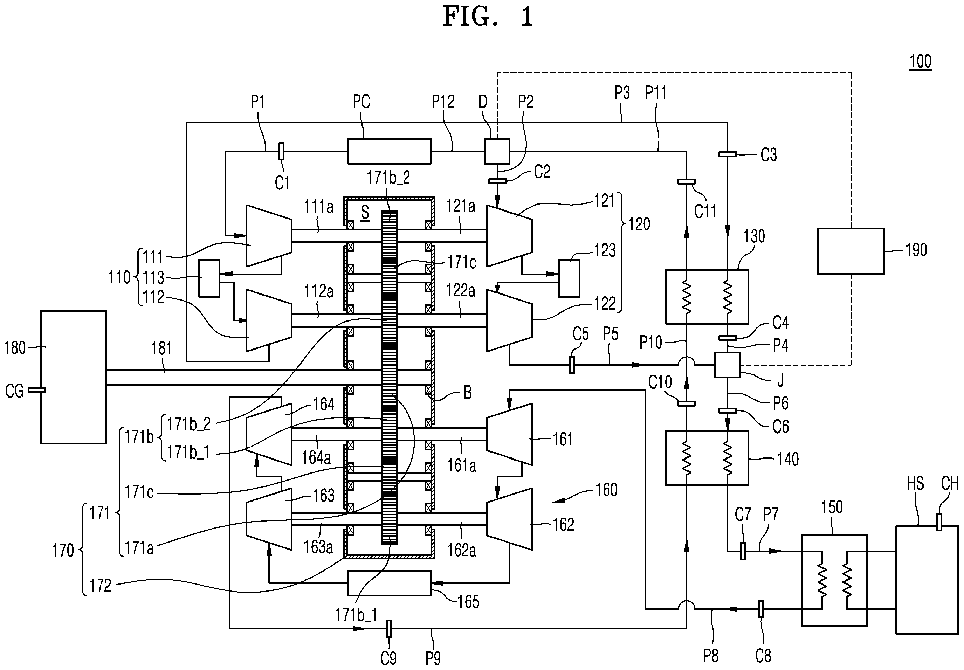

FIG. 1 is a schematic block diagram of a supercritical carbon dioxide (CO₂) power generation system according to an embodiment.

### BEST MODE

According to an aspect of the present disclosure, a supercritical carbon dioxide (CO₂) power generation system using supercritical CO₂ as a working fluid, includes a first compression part compressing the working fluid, a second compression part compressing the working fluid, a first regeneration part heating the working fluid compressed by the first compression part, a second regeneration part heating the working fluid heated by the first regeneration part and the working fluid compressed by the second compression part, a main heat exchange part transferring heat generated from a heat source to the working fluid heated by the second regeneration part, an expansion part generating a power while expanding the working fluid that has received heat from the main heat exchange part, a power transmission part transmitting the power generated by the expansion part to the first compression part and the second compression part, and a power generation part generating power by receiving the power from the power transmission part.

Here, the working fluid from the expansion part may sequentially perform heat exchange in the second regeneration part and the first regeneration part.

Here, the working fluid from the expansion part may exchange heat with the working fluid heated in the first regeneration part and the working fluid compressed in the second compression part, in the second regeneration part, and may exchange heat with the working fluid compressed in the first compression part, in the first regeneration part.

Here, the power transmission part may include at least one gear train and a gear box accommodating the gear train.

Here, the gear train may receive a power from a rotary shaft of the expansion part and may transmit the power to a driving shaft of the first compression part, a driving shaft of the second compression part, and a driving shaft of the power generation part.

Here, the working fluid moving to the first compression part may be cooled down by a pre-cooler.

Here, the first compression part may include at least two first compressors.

Here, a first inter-cooler may be arranged between the two first compressors.

Here, the second compression part may include at least two second compressors.

Here, a second inter-cooler may be arranged between the two second compressors.

Here, a branching portion is arranged on a conduit between the second compression part and the first regeneration part.

Here, the supercritical CO₂ power generation system may further include a control part controlling the branching portion.

Here, the first compression part and the second compression part may face each other with the gear box therebetween.

Here, a join portion at which the working fluid compressed by the second compression part and the working fluid heated by the first regeneration part join each other may be arranged on a conduit between the first regeneration part and the second regeneration part.

Here, the supercritical CO₂ power generation system may further include a control part controlling the join portion.

Here, the expansion part may include at least two expanders.

Here, at least one reheater may be arranged between the at least two expanders.

Here, the gear train may include an output pinion gear, a bull gear receiving a power from the output pinion gear, and a driving pinion gear receiving the power from the bull gear, a rotary shaft of the expansion part may be connected to the output pinion gear, a driving shaft of the first compression part and a driving shaft of the second compression part may be connected to the driving pinion gear, and a driving shaft of the power generation part may be connected to the bull gear.

Here, the gear train may be arranged in a single space within the gear box.

### MODE OF DISCLOSURE

Hereinafter, one or more embodiments of the present disclosure will be described in detail with reference to accompanying drawings. Also, in the present specification and drawings, like reference numerals denote substantially the same components and detailed descriptions thereof are not repeated.

A supercritical carbon dioxide (CO₂) power generation system according to the present disclosure denotes a system using supercritical CO₂ as a working fluid, and includes not only a system in which all of working fluid flowing in a cycle is supercritical, but also includes a system in which most of the working fluid is supercritical and remaining working fluid is subcritical.

In addition, the working fluid according to the present disclosure is CO₂, and CO₂ broadly includes pure CO₂, CO₂ including a small amount of impurity, a fluid in which CO₂ is mixed with one or more additives, etc.

FIG. 1 is a schematic block diagram of a supercritical CO₂ power generation system according to an embodiment.

Referring to FIG. 1, the supercritical CO₂ power generation system 100 according to the present embodiment includes a first compression part 110, a second compression part 120, a first regeneration part 130, a second regeneration part 140, a main heat exchange part 150, an expansion part 160, a power transmission part 170, a power generation part 180, and a control part 190.

The first compression part 110 includes two first compressors 111 and 112, a first inter-cooler 113 disposed between the first compressors 111 and 112, and is driven by a power transmitted from the power transmission part 170.

The first compressors 111 and 112 receives a working fluid from a first conduit P1 to compress the working fluid, and respectively include centrifugal compressors.

Here, the first conduit P1 is connected to a pre-cooler PC, and the pre-cooler PC cools down some of the working fluid discharged from a branching portion D.

The branching portion D is disposed on a conduit between the second compression part 120 and the first regeneration 130, and may include an electronic valve that may be electrically controlled or a mechanical valve that may be manually controlled. Therefore, the control part 190 may automatically control the branching portion D, or a user may manually control the branching portion D. Since the branching portion D is connected to an eleventh conduit P11, a twelfth conduit P12, and a second conduit P2, when the branching portion D is controlled, a flow amount of whole working fluid flowing through the eleventh conduit P11 may be controlled, and moreover, a flow amount of the working fluid flowing through the second conduit P2 and the twelfth conduit P12 may be also controlled.

According to the embodiment, the pre-cooler PC is connected to the first conduit P1, but is not limited thereto. That is, according to the present disclosure, the pre-cooler PC may not be connected to the first conduit P1.

The first inter-cooler 113 is disposed between the first compressors 111 and 112. The first inter-cooler 113 cools down the working fluid discharged from the first compressor 111, thereby reducing a power consumption of the first compression part 110.

According to the embodiment, the first compression part 110 includes two first compressors 111 and 112, but is not limited thereto. That is, according to the present disclosure, the first compression part may include at least one compressor, and the number of compressors is not particularly restricted. For example, the first compression part may include one, three, four, five, or more compressors.

According to the embodiment, the first compression part 110 includes the first inter-cooler 113, but is not limited thereto. The first compression part according to the present disclosure may not include the inter-cooler.

In addition, the second compression part 120 may include two second compressors 121 and 122, and a second inter-cooler 123 disposed between the second compressors 121 and 122. The second compression part 120 is driven by the power transmitted from the power transmission part 170. The first compression part 110 and the second compression part 120 are arranged to face each other with a gear box 172 of the power transmission part 170 therebetween.

The second compressors 121 and 122 receive the working fluid from the second conduit P2 to compress the working fluid, and respectively include centrifugal compressors.

The second inter-cooler 123 is disposed between the second compressors 121 and 122. The second inter-cooler 123 cools down the working fluid discharged from the second compressor 121, thereby reducing a power consumption of the second compression part 120.

According to the embodiment, the second compression part 120 includes two second compressors 121 and 122, but is not limited thereto. That is, according to the present disclosure, the second compression part may include at least one compressor, and the number of compressors is not particularly restricted. For example, the second compression part may include one, three, four, five, or more compressors.

According to the embodiment, the second compression part 120 includes the second inter-cooler 123, but is not limited thereto. The second compression part 120 according to the present disclosure may not include the inter-cooler.

In addition, the first regeneration part 130 receives the working fluid compressed by the first compression part 110 and transferred through a third conduit P3, and heats the working fluid. That is, the working fluid compressed by the first compression part 110 exchanges heat with the working fluid discharged from the second regeneration part 140 while passing through the first regeneration part 130. To do this, the first regeneration part 130 may have a structure of a general heat exchange part.

The working fluid heated by the first regeneration part 130 moves through a fourth conduit P4, and the working fluid compressed by the second compression part 120 moves through a fifth conduit P5. Then, the working fluids join at a join portion J and is moved to the second regeneration part 140 through a sixth conduit P6.

The join portion J is disposed on a conduit between the first regeneration part 130 and the second regeneration part 140, and may include an electric valve that may be electrically controlled or a mechanical valve that may be manually controlled. Therefore, the control part 190 may automatically control the joint portion J, or a user may manually control the join portion J.

Since the join portion J is connected to the fourth conduit P4, the fifth conduit P5, and the sixth conduit P6, when the joint portion J is controlled, a flow amount of overall working fluid flowing through the sixth conduit P6, and moreover, a flow amount of the working fluid flowing through the fourth conduit P4 and the fifth conduit P5 may be controlled.

According to the present embodiment, the joint portion J is separated from the second regeneration part 140, but is not limited thereto. That is, according to the present disclosure, the working fluid moved through the fifth conduit P5 may be directly moved to the second regeneration part 140. In this case, the join portion J is arranged inside the second regeneration part 140, and thus, the working fluid moved through the fourth conduit P4 and the working fluid moved through the fifth conduit P5 join at the join portion J arranged within the second regeneration part 140.

In addition, the second regeneration part 140 heats the working fluid heated by the first regeneration part 130 and the working fluid compressed by the second compression part 120. That is, the working fluid discharged out of the join portion J and moved to the second regeneration part 140 through the sixth conduit P6 may exchange heat with the working fluid discharged from the expansion part 160 while passing through the second regeneration part 140. To do this, the second regeneration part 140 may have a structure of a general heat exchange part.

The working fluid heated by the second regeneration part 140 is moved through a seventh conduit P7 to the main heat exchange part 150.

The main heat exchange part 150 transfers heat generated by a heat source HS to the working fluid heated by the second regeneration part 140. To do this, the main heat exchange part 150 may have a structure of a general heat exchange part.

The heat source HS may include any type of device that may generate heat. For example, the heat source HS may include various types of heat sources such as a solar heat system, a nuclear heat system, a geothermal heat system, a thermal heat system, etc.

The working fluid receiving the heat generated by the heat source HS is moved to the expansion part 160 via an eighth conduit P8.

The expansion part 160 generates power while expanding the working fluid receiving the heat transferred from the main heat exchange part 150, and the expansion part 160 includes first to fourth expanders 161, 162, 163, and 164, and a reheater 165.

The first to fourth expanders 161, 162, 163, and 164 may each have a turbine structure, and the reheater 165 is arranged between the second expander 162 and the third expander 163. The reheater 165 is driven by the heat transferred from the heat source HS, or may be driven by an additional driving source.

The expansion part 160 according to the present embodiment includes four expanders, that is, first to fourth expanders 161, 162, 163, and 164, but is not limited thereto. That is, the expansion part may include at least one expander, and the number of expanders is not particularly restricted. For example, the expansion part may include one, two, three, five, six, or more expanders.

According to the embodiment, the expansion part 160 includes a single reheater 165, but is not limited thereto. That is, the expansion part 160 may include a plurality of reheaters. For example, the reheaters may be arranged between the first and second expanders 161 and 162, and between the third expander 163 and the fourth expander 164. Moreover, the expansion part according to the present disclosure may not include the reheater.

In addition, the power transmission part 170 transmits power generated by the expansion part 160 to the first and second compression parts 110 and 120, and transmits remaining power to the power generation part 180 to perform the electric power generation.

The power transmission part 170 includes at least one gear train 171, and a gear box 172 accommodating the gear train 171. The gear train 171 receives a power from rotary shafts 161a, 162a, 163a, and 164a of the expansion part 160, and transmits the power to a driving shaft 111a of the first compression part 110, driving shafts 121a and 122a of the second compression part 120, and a driving shaft 181 of the power generation part 180.

The gear train of the power transmission part according to the present disclosure may have various shapes. That is, a designer may design the gear trains having various performances and structures. As an example, the gear train 171 according to the embodiment may include a bull gear 171a, a plurality of pinion gears 171b, and a plurality of connection gears 171c. The pinion gears 171b may include an output pinion gear 171b_1 and a driving pinion gear 171b_2. There is no particular limitation in shapes of the gears configuring the gear train 171, for example, the gears may have a spur gear shape, a helical gear shape, a double helical gear shape, etc.

The rotary shafts 161a, 162a, 163a, and 164a of the first to fourth expanders 161, 162, 163, and 164 are connected to the output pinion gear 171b_1, and the driving shafts 111a and 112a of the first compressors 111 and 112 and the driving shafts 121a and 122a of the second compressors 121 and 122 are connected to the driving pinion gear 171b_2. In addition, the connection gear 171c engages with the pinion gears 171b to transmit the power.

The gear box 172 according to the embodiment include a metal material, but is not limited thereto. That is, there is no particular limitation in materials for forming the gear box according to the present disclosure, but various materials may be used.

The gear train 171 of the embodiment is concentrated in a single space S in the gear box 172, and installed via a plurality of bearings B.

Since the gear train 171 is concentrated in the single space S within the gear box 172 in the power transmission part 170 according to the present embodiment, supplying of oil and circulating of oil for lubricating the gear train 171 may be performed easy, and the gear train 171 may be effectively arranged. Thus, a volume of the overall power transmission part 170 may be decreased. Therefore, the overall structure of the supercritical CO₂ power generation system 100 is simplified and an installation space may be effectively utilized, and accordingly, a size of the installation space of the supercritical CO₂ power generation system 100 may be reduced.

According to the embodiment, the gear train 171 is arranged in the single space S within the gear box 172, but is not limited thereto. That is, according to the present disclosure, a space within the gear box 172 may be partitioned into a plurality of spaces, and parts of the gear train may be distributed respectively to the partitioned spaces.

The power generation part 180 receives a power from the power transmission part 170 to generate electric power, and the power generation part 180 may have a general electric power generator structure. The driving shaft 181 of the power generation part 180 is connected to the gear train 171 of the power transmission part 170 to receive the power.

The control part 190 controls the supercritical CO₂ power generation system 100, that is, the control part 190 is connected to various sensors of the supercritical CO₂ power generation system 100 to receive sensor data and perform calculation, and controls operations of the components in the supercritical CO₂ power generation system 100 according to an algorithm set by the user. To this end, the control part 190 may include hardware such as an electronic circuit board, an integrated circuit chip, etc., software, firmware, etc., and is operated according to a control of the user or a control algorithm.

The supercritical CO₂ power generation system 100 according to the present embodiment includes various sensors, for example, first to eleventh sensors C1, C2, C3, C4, C5, C6, C7, C8, C9, C10, and C11 for measuring a pressure, a temperature, a flow amount, a specific volume, etc., of the working fluid are respectively arranged in the first to eleventh conduits P1 to P11, a heat source sensor CH for monitoring status of the heat source HS is arranged in the heat source HS, and a power generation part sensor CG for monitoring status of the power generation part 180 is arranged in the power generation part 180.

Hereinafter, an example of a controlling operation of the control part 190 will be described below. For example, the control part 190 may appropriately control at least one of the branching portion D and the join portion J according to a state of the supercritical CO₂ power generation system 100. That is, the control part 190 monitors a state of the heat source HS by using the heat source sensor CH provided in the heat source HS, a state of the power generation part 180 by using the power generation part sensor CG, and the state of the working fluid in each conduit, that is, temperature, pressure, flow amount, etc., of the working fluid by using the sensors C1 to C11, and then, may control the branching portion D, the join portion J, etc. for implementing an optimal operating efficiency as being programmed in advance. For example, when the branching portion D is controlled, the flow amount of the working fluid moving to the first compression part 110 and the second compression part 120 may be appropriately adjusted, and when the join portion J is controlled, a flow amount of the working fluid discharged from the second compression part 120, a flow amount of the working fluid discharged from the first regeneration part 130, and a flow amount of the working fluid entering the second regeneration part 140 may be appropriately adjusted. Then, the optimal efficiency of the supercritical CO₂ power generation system 100 may be implemented, and moreover, generation of surge in the first compression part 110 and the second compression part 120 may be prevented in some cases.

Hereinafter, operations of the supercritical CO₂ power generation system 100 according to the embodiment will be described below with reference to FIG. 1.

Since supercritical CO₂ circulates in a closed cycle in the supercritical CO₂ power generation system 100 according to the embodiment, circulation processes of the working fluid will be described below.

First, the working fluid discharged from the first regeneration part 130 is moved to the branching portion D along the eleventh conduit P11. Some of the working fluid from the branching portion D is moved to the first compression part 110, and in this case, the working fluid enters the pre-cooler PC via the twelfth conduit P12 to be cooled down. Remaining operation fluid from the branching portion D is moved to the second compressor 121 via the second conduit P2. Here, the control part 190 may control the branching portion D so that the supercritical CO₂ power generation system 100 may achieve optimal performance.

The working fluid that is cooled down in the pre-cooler PC is moved to the first compressor 111, and the first compressor 111 compresses the working fluid. The working fluid compressed by the first compressor 111 is moved to the first inter-cooler 113 to be cooled down, and the working fluid that is cooled down enters the first compressor 112 and is compressed.

The working fluid compressed by the first compressor 112 is moved to the first regeneration part 130 via the third conduit P3. The working fluid moved to the first regeneration part 130 via the third conduit P3 exchanges heat with the working fluid moved through the tenth conduit P10, and then, is heated.

The working fluid that is heated through the heat exchange in the first regeneration part 130 is moved to the join portion J via the fourth conduit P4.

On the other hand, the working fluid moved to the second compressor 121 from the branching portion D is compressed by the second compressor 121. The working fluid compressed by the second compressor 121 is moved to the second inter-cooler 123 to be cooled down, and the working fluid that is cooled down enters the second compressor 122 and is compressed.

The working fluid compressed by the second compressor 122 is moved to the join portion J via the fifth conduit P5.

As described above, the working fluid moved through the fourth conduit P4 and the working fluid moved through the fifth conduit P5 join each other in the join portion J, and then, the control part 190 may control the join portion J so that the supercritical CO₂ power generation system may achieve the optimal performance.

In addition, the working fluid from the join portion J is moved to the second regeneration part 140 through the sixth conduit P6. The working fluid moved to the second regeneration part 140 through the sixth conduit P6 exchanges heat with the working fluid moved through the ninth conduit P9 to be heated. That is, the working fluid heated in the first regeneration part 130 and the working fluid compressed by the second compression part 120 join in the join portion J, and after that, is heated in the second regeneration part 140.

In addition, the working fluid heated in the second regeneration part 140 is moved through a seventh conduit P7 to the main heat exchange part 150. The main heat exchange part 150 transfers heat generated by the heat source HS to the working fluid from the second regeneration part 140.

The working fluid that has received the heat generated by the heat source HS is moved to the expansion part 160 via the eighth conduit P8, and the expansion part 160 generates the power while expanding the working fluid that has received the heat in the main heat exchange part 150.

That is, the working fluid is moved to the first expander 161 via the eighth conduit P8 and expands to generate the power, and next, is moved to the second expander 162 and expands to generate the power, and then, is heated again by the reheater 165. In addition, the working fluid heated by the reheater 165 is moved to the third expander 163 and expands to generate the power, and then, is moved to the fourth expander 164 and expands to generate the power.

Next, the working fluid from the expansion part 160 sequentially exchanges heat in the second regeneration part 140 and the first regeneration part 130.

That is, the working fluid from the fourth expander 164 is moved to the second regeneration part 140 via the ninth conduit P9, and exchanges the heat with the working fluid moved to the second regeneration part 140 via the sixth conduit P6. In addition, the working fluid from the second regeneration part 140 is moved to the first regeneration part 130 via the tenth conduit P10, and exchanges the heat with the working fluid moved to the first regeneration part 130 via the third conduit P3.

Operations of the components in the supercritical CO₂ power generation system 100 according to circulation of the working fluid have been described as above. Hereinafter, driving of the power transmission part 170 and the power generation part 180 will be described in detail below.

As described above, the first to fourth expanders 161, 162, 163, and 164 of the expansion part 160 generates the power while expanding the working fluid. At this time, the rotary shafts 161a, 162a, 163a, and 164a of the first to fourth expanders 161 to 164 transmit the power to the output pinion gear 171b_1 of the power transmission part 170, and the output pinion gear 171b_1 transmits the power to the bull gear 171a.

The bull gear 171a that has received the power transmits the power to the driving pinion gear 171b_2, and the driving pinion gear 171b_2 transmits the power to the driving shafts 111a and 112a of the first compressors 111 and 121 and the driving shafts 121a and 122a of the second compressors 121 and 122 so as to drive the first compression part 110 and the second compression part 120.

In addition, since the bull gear 171a is connected to the driving shaft 181 of the power generation part 180, and the power is transmitted to the power generation part 180 according to rotation of the bull gear 171a to perform power generation.

As described above, according to the supercritical CO₂ power generation system 100 according to the present embodiment, the control part 190 may appropriately control at least one of the branching portion D and the join portion J according to the state of the supercritical CO₂ power generation system 100, and thus, optimal performance of the supercritical CO₂ power generation system 100 may be implemented, and moreover, generation of surge in the first compression part 110 and the second compression part 120 may be prevented in some cases.

In addition, according to the supercritical CO₂ power generation system 100 of the present embodiment, the gear train 171 of the power transmission part 170 is concentrated in the single space S within the gear box 172, and thus, supplying and circulating of oil for lubricating the gear train 171 may be easily performed and the gear train 171 may be effectively arranged, thereby reducing the overall volume of the power transmission part 170. Therefore, the overall structure of the supercritical CO₂ power generation system 100 is simplified and an installation space may be effectively utilized, and accordingly, a size of the installation space of the supercritical CO₂ power generation system may be reduced.

### INDUSTRIAL APPLICABILITY

The supercritical CO₂ power generation system according to the embodiment may be used in an industrial field of manufacturing or operating a power generation system using the supercritical CO₂ as the working fluid.

## Claims

1. A supercritical carbon dioxide (CO₂) power generation system (100) using supercritical CO₂ as a working fluid, the supercritical CO₂ power generation system (100) comprising:
a first compression part (110) and a second compression part (120) configured to compress the working fluid;
a first regeneration part (130) heating the working fluid compressed by the first compression part (110);
a second regeneration part (140) heating the working fluid heated by the first regeneration part (130) and the working fluid compressed by the second compression part (120);
a main heat exchange part (150) transferring heat generated from a heat source (HS) to the working fluid heated by the second regeneration part (140);
an expansion part (160) generating power by expanding the working fluid that has received heat from the main heat exchange part (150);
a power transmission part (170) transmitting the power generated by the expansion part (160) to the first compression part (110) and the second compression part (120); and
a power generation part (180) generating power using the power transmitted from the power transmission part (170),
**characterised in that** it further comprises a branching portion (D) arranged on a conduit (P) between the second compression part (120) and the first regeneration part (130), and configured to adjust a flow rate of the working fluid flowing from the first regeneration part (130) to the first compression part (110) and the second compression part (120).

2. The supercritical CO₂ power generation system (100) of claim 1, wherein
the working fluid from the expansion part (160) sequentially performs heat exchange in the second regeneration part (140) and the first regeneration part (130).

3. The supercritical CO₂ power generation system (100) of claim 2, wherein the working fluid from the expansion part (160) exchanges heat with the working fluid heated in the first regeneration part (130) and the working fluid compressed in the second compression part (120), in the second regeneration part (140), and
exchanges heat with the working fluid compressed in the first compression part (110), in the first regeneration part (130).

4. The supercritical CO₂ power generation system (100) of claim 1, wherein
the power transmission part (170) comprises at least one gear train (171) and a gear box (172) accommodating the gear train (171).

5. The supercritical CO₂ power generation system (100) of claim 1, wherein
the first compression part (110) comprises at least two first compressors (111, 112).

6. The supercritical CO₂ power generation system (100) of claim 5, wherein
a first inter-cooler (113) is arranged between the two first compressors (111, 112).

7. The supercritical CO₂ power generation system (100) of claim 1, wherein
the second compression part (120) comprises at least two second compressors (121, 122).

8. The supercritical CO₂ power generation system (100) of claim 7, wherein
a second inter-cooler (123) is arranged between the two second compressors (121, 122).

9. The supercritical CO₂ power generation system (100) of claim 1, further comprising
a control part (190) controlling the branching portion (D).

10. The supercritical CO₂ power generation system (100) of claim 1, wherein
a join portion (J) at which the working fluid compressed by the second compression part (120) and the working fluid heated by the first regeneration part (130) join each other is arranged on a conduit (P) between the first regeneration part (130) and the second regeneration part (140).

11. The supercritical CO₂ power generation system (100) of claim 10, further comprising
a control part (190) controlling the join portion (J).

12. The supercritical CO₂ power generation system (100) of claim 1, wherein
the expansion part (160) comprises at least two expanders (161, 162, 163, 164).

13. The supercritical CO₂ power generation system (100) of claim 12, wherein
at least one reheater (165) is arranged between the at least two expanders (161, 162 , 163, 164).

14. The supercritical CO₂ power generation system (100) of claim 1, wherein
the gear train (171) comprises an output pinion gear (171b_1) , a bull gear (171a) receiving a power from the output pinion gear (171b_1), and a driving pinion gear (171b_2) receiving the power from the bull gear (171a),
wherein a rotary shaft (161a, 162a, 163a, and 164a) of the expansion part (160) is connected to the output pinion gear (171b_1),
wherein a driving shaft (111a) of the first compression part (110) and a driving shaft (121a, 122a) of the second compression part (120) are connected to the driving pinion gear (171b_2), and
a driving shaft (181) of the power generation part (180) is connected to the bull gear (171a).

## Patentansprüche

1. Ein superkritisches Kohlendioxid (CO₂) Energieerzeugungssystem (100), das superkritisches CO₂ als Arbeitsfluid verwendet, wobei das superkritische CO₂ Energieerzeugungssystem (100) umfasst:
ein erstes Kompressionsteil (110) und ein zweites Kompressionsteil (120), das so konfiguriert ist, dass es das Arbeitsfluid komprimiert;
einen ersten Regenerationsteil (130), der das durch das erste Kompressionsteil (110) komprimierte Arbeitsmittel erwärmt;
einen zweiten Regenerationsteil (140), der das durch den ersten Regenerationsteil (130) erwärmte Arbeitsmittel und das durch den zweiten Kompressionsteil (120) komprimierte Arbeitsmittel erwärmt;
ein Hauptwärmetauscherteil (150), der die von einer Wärmequelle (HS) erzeugte Wärme an das vom zweiten Regenerationsteil (140) erwärmte Arbeitsmittel überträgt;
ein Expansionsteil (160), das Energie erzeugt, indem es das Arbeitsfluid expandiert, das Wärme vom Hauptwärmeaustauschteil (150) erhalten hat;
ein Kraftübertragungsteil (170), das die von dem Expansionsteil (160) erzeugte Kraft an das erste Kompressionsteil (110) und das zweite Kompressionsteil (120) überträgt; und
einen Energieerzeugungsteil (180), der Energie erzeugt unter Verwendung der von dem Energieübertragungsteil (170) übertragenen Energie,
**dadurch gekennzeichnet, dass** es ferner einen Verzweigungsabschnitt (D) umfasst, der an einer Leitung (P) zwischen dem zweiten Kompressionsteil (120) und dem ersten Regenerationsteil (130) angeordnet und so konfiguriert ist, dass er eine Durchflussmenge des Arbeitsfluids einstellt, das von dem ersten Regenerationsteil (130) zu dem ersten Kompressionsteil (110) und dem zweiten Kompressionsteil (120) fließt.

2. Das überkritische CO₂ Stromerzeugungssystem (100) nach Anspruch 1, wobei
die Arbeitsflüssigkeit aus dem Expansionsteil (160) führt nacheinander einen Wärmeaustausch im zweiten Regenerationsteil (140) und im ersten Regenerationsteil (130) durch.

3. Das überkritische CO₂ Stromerzeugungssystem (100) nach Anspruch 2, wobei das Arbeitsmittel aus dem Expansionsteil (160) mit dem im ersten Regenerationsteil (130) erwärmten Arbeitsmittel und dem im zweiten Kompressionsteil (120) komprimierten Arbeitsmittel im zweiten Regenerationsteil (140) Wärme austauscht, und
tauscht mit dem im ersten Verdichtungsteil (110) verdichteten Arbeitsmittel im ersten Regenerationsteil (130) Wärme aus.

4. Das überkritische CO₂ Stromerzeugungssystem (100) nach Anspruch 1, wobei
der Kraftübertragungsteil (170) mindestens einen Getriebezug (171) und ein Getriebegehäuse (172) umfasst, in dem der Getriebezug (171) untergebracht ist.

5. Das überkritische CO₂ Stromerzeugungssystem (100) nach Anspruch 1, wobei
der erste Kompressionsteil (110) mindestens zwei erste Verdichter (111, 112) umfasst.

6. Das überkritische CO₂ Stromerzeugungssystem (100) nach Anspruch 5, wobei
ein erster Zwischenkühler (113) ist zwischen den beiden ersten Verdichtern (111, 112) angeordnet.

7. Das überkritische CO₂ Stromerzeugungssystem (100) nach Anspruch 1, wobei
der zweite Kompressionsteil (120) umfasst mindestens zwei zweite Verdichter (121, 122).

8. Das überkritische CO₂ Stromerzeugungssystem (100) nach Anspruch 7, wobei
ein zweiter Zwischenkühler (123) ist zwischen den beiden zweiten Verdichtern (121, 122) angeordnet.

9. Das überkritische CO₂ Stromerzeugungssystem (100) nach Anspruch 1, das ferner Folgendes umfasst
ein Steuerteil (190), das den Verzweigungsabschnitt (D) steuert.

10. Das überkritische CO₂ Stromerzeugungssystem (100) nach Anspruch 1, wobei
ein Verbindungsabschnitt (J), an dem das durch den zweiten Kompressionsteil (120) verdichtete Arbeitsfluid und das durch den ersten Regenerationsteil (130) erwärmte Arbeitsfluid zusammengeführt werden, auf einer Leitung (P) zwischen dem ersten Regenerationsteil (130) und dem zweiten Regenerationsteil (140) angeordnet ist.

11. Das superkritische CO₂ Stromerzeugungssystem (100) nach Anspruch 10, das ferner Folgendes umfasst
ein Steuerteil (190), das den Verbindungsabschnitt (J) steuert.

12. Das überkritische CO₂ Stromerzeugungssystem (100) nach Anspruch 1, wobei
das Expansionsteil (160) mindestens zwei Expander ( 161, 162 , 163, 164) umfasst.

13. Das überkritische CO₂ Stromerzeugungssystem (100) nach Anspruch 12, wobei
mindestens ein Nacherhitzer (165) zwischen den mindestens zwei Expandern (161, 162, 163, 164) angeordnet ist.

14. Das überkritische CO₂ Stromerzeugungssystem (100) nach Anspruch 1, wobei
das Getriebe (171) umfasst ein Ausgangsritzel (171b_1) , ein Antriebsritzel (171a), das eine Leistung vom Ausgangsritzel (171b_1) erhält, und ein Antriebsritzel ( 171b_2) , das die Leistung vom Antriebsritzel (171a) erhält,
wobei eine Drehwelle (161a, 162a, 163a, und 164a) des Expansionsteils (160) mit dem Ausgangsritzel (171b_1) verbunden ist,
wobei eine Antriebswelle (111a) des ersten Kompressionsteils (110) und eine Antriebswelle (121a, 122a) des zweiten Kompressionsteils (120) mit dem Antriebsritzel (171b_2) verbunden sind, und
eine Antriebswelle (181) des Stromerzeugungsteils (180) ist mit dem Hohlrad (171a) verbunden.

## Revendications

1. Système de production d'énergie à base de dioxyde de carbone supercritique (CO₂ ) (100) utilisant du CO supercritique₂ comme fluide de travail, le système de production d'énergie à base de CO supercritique₂ (100) comprenant :
une première partie de compression (110) et une deuxième partie de compression (120) configurées pour comprimer le fluide de travail ;
une première partie de régénération (130) chauffant le fluide de travail comprimé par la première partie de compression (110) ;
une deuxième partie de régénération (140) chauffant le fluide de travail chauffé par la première partie de régénération (130) et le fluide de travail comprimé par la deuxième partie de compression (120) ;
une partie principale d'échange de chaleur (150) transférant la chaleur générée par une source de chaleur (HS) au fluide de travail chauffé par la seconde partie de régénération (140) ;
une partie d'expansion (160) générant de l'énergie en dilatant le fluide de travail qui a reçu de la chaleur de la partie principale d'échange de chaleur (150) ;
une partie de transmission de puissance (170) transmettant la puissance générée par la partie d'expansion (160) à la première partie de compression (110) et à la seconde partie de compression (120) ; et
une partie de génération d'énergie (180) générant de l'énergie en utilisant l'énergie transmise par la partie de transmission d'énergie (170),
**caractérisé en ce qu'**il comprend en outre une partie de ramification (D) disposée sur un conduit (P) entre la deuxième partie de compression (120) et la première partie de régénération (130), et configurée pour ajuster un débit du fluide de travail s'écoulant de la première partie de régénération (130) vers la première partie de compression (110) et la deuxième partie de compression (120) .

2. Système de production d'énergie à base de CO₂ supercritique (100) de la revendication 1, dans lequel
le fluide de travail provenant de la partie d'expansion (160) effectue séquentiellement un échange de chaleur dans la seconde partie de régénération (140) et la première partie de régénération (130).

3. Système de génération d'énergie supercritique CO₂ (100) de la revendication 2, dans lequel
le fluide de travail provenant de la partie de détente (160) échange de la chaleur avec le fluide de travail chauffé dans la première partie de régénération (130) et le fluide de travail comprimé dans la deuxième partie de compression (120), dans la deuxième partie de régénération (140), et
échange de la chaleur avec le fluide de travail comprimé dans la première partie de compression (110), dans la première partie de régénération (130).

4. Système de production d'énergie supercritique CO₂ (100) de la revendication 1, dans lequel
la partie de transmission de puissance (170) comprend au moins un train d'engrenages (171) et une boîte de vitesses (172) recevant le train d'engrenages (171).

5. Système de production d'énergie supercritique CO₂ (100) de la revendication 1, dans lequel
la première partie de compression (110) comprend au moins deux premiers compresseurs (111, 112).

6. Système de production d'énergie supercritique CO₂ (100) de la revendication 5, dans lequel
un premier inter-refroidisseur (113) est disposé entre les deux premiers compresseurs (111, 112).

7. Système de production d'énergie supercritique CO₂ (100) de la revendication 1, dans lequel
la seconde partie de compression (120) comprend au moins deux seconds compresseurs (121, 122).

8. Système de génération d'énergie supercritique CO₂ (100) de la revendication 7, dans lequel
un second inter-refroidisseur (123) est disposé entre les deux seconds compresseurs (121, 122) .

9. Système de génération d'énergie supercritique CO₂ (100) de la revendication 1, comprenant en outre
une partie de commande (190) commandant la partie de branchement (D).

10. Système de production d'énergie supercritique CO₂ (100) de la revendication 1, dans lequel
une partie de jonction (J) au niveau de laquelle le fluide de travail comprimé par la seconde partie de compression (120) et le fluide de travail chauffé par la première partie de régénération (130) se rejoignent est disposée sur un conduit (P) entre la première partie de régénération (130) et la seconde partie de régénération (140).

11. Système de génération d'énergie supercritique CO₂ (100) de la revendication 10, comprenant en outre
une partie de commande (190) commandant la partie de jonction (J).

12. Système de production d'énergie supercritique CO₂ (100) de la revendication 1, dans lequel
la partie d'expansion (160) comprend au moins deux expanseurs ( 161, 162 , 163, 164).

13. Système de production d'énergie supercritique CO₂ (100) de la revendication 12, dans lequel
au moins un réchauffeur (165) est disposé entre les au moins deux expanseurs (161, 162, 163, 164).

14. Système de génération d'énergie supercritique CO₂ (100) de la revendication 1, dans lequel
le train d'engrenages (171) comprend un pignon de sortie (171b_1) , un engrenage à taureau (171a) recevant une puissance du pignon de sortie (171b_1) , et un pignon d'entraînement ( 171b_2) recevant la puissance de l'engrenage à taureau (171a),
dans lequel un arbre rotatif (161a, 162a, 163a et 164a) de la partie d'expansion (160) est relié au pignon de sortie (171b_1),
dans lequel un arbre d'entraînement (111a) de la première partie de compression (110) et un arbre d'entraînement (121a, 122a) de la seconde partie de compression (120) sont reliés au pignon d'entraînement (171b_2), et
un arbre d'entraînement (181) de la partie de génération d'énergie (180) est relié à l'engrenage à taureau (171a).
